# EUROPEAN PATENT APPLICATION

(11) **EP 4 089 480 A1**
(43) Date of publication of application: **16.11.2022**
(21) Application number: 21744187.2
(22) Date of filing: 14.01.2021
(51) Int. Cl.: G03B 35/08, H04N 13/243

(54) **3D PHOTOGRAPHIC APPARATUS, 3D PHOTOGRAPHING METHOD, AND 3D DISPLAY TERMINAL**

(30) Priority: 20.01.2020 CN 202010073900
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2021/071698
(87) International publication number: WO 2021/147751

(57) **Abstract**

The present application relates to the technical field of 3D, and discloses a photographing apparatus, comprising at least three cameras, wherein a first camera of the at least three cameras is taken as a center, and the remaining cameras of the at least three cameras are arranged at a periphery of the first camera; connecting lines between the remaining cameras and the first camera form at least one right angle; and any two of the at least three cameras are capable of photographing a 3D image by cooperation. The 3D photographing apparatus ensures a 3D photographing effect after change in postures of the cameras. The present application further discloses a 3D photographing method, a 3D display terminal apparatus, a computer-readable storage medium, and a computer program product.

## Description

The present application claims priority to the Chinese Patent Application with an application number of 202010073900.4 and a title of "3D Photographing Apparatus, 3D Photographing Method and 3D Display Terminal", filed to China National Intellectual Property Administration on January 20th, 2020, the disclosures of which are hereby incorporated by reference.

### TECHNICAL FIELD

The present application relates to the technical field of 3D, and for example, relates to a 3D photographing apparatus, a 3D photographing method and a 3D display terminal.

### BACKGROUND

At present, with increasingly extensive application of 3D display terminals, requirements on 3D display are correspondingly improved. Usually, 3D display is realized by respectively acquiring a left-eye image and a right-eye image with two cameras.

In a process of implementing embodiments of the present disclosure, at least the following problems are found in related technologies:
During live broadcasting of a 3D image, a change in spatial positions of two cameras, such as a change in a spatial position of a bearing apparatus with two cameras or a display device with two cameras will cause a problem that: the 3D image composited based on the left-eye image and the right-eye image acquired by the two cameras is disordered, so that a display screen is unable to display a correct 3D image.

### SUMMARY

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a 3D photographing apparatus, a 3D photographing method, a 3D display terminal, a computer-readable storage medium, and a computer program product, to solve a technical problem that a 3D image is disordered after change in posture positions of cameras in the existing technologies.

In some embodiments, the 3D photographing apparatus comprises at least three cameras; a first camera of the at least three cameras is taken as a center, and the remaining cameras of the at least three cameras are arranged at a periphery of the first camera; and connecting lines between the remaining cameras and the first camera form at least one right angle, wherein any two of the at least three cameras are capable of photographing a 3D image by cooperation.

In some embodiments, the remaining cameras comprise a second camera, a third camera and a fourth camera; the second camera and the fourth camera are oppositely arranged at both sides of the first camera; a connecting line between the third camera and the first camera is at a right angle to a connecting line between the second camera and the first camera, and a connecting line between the third camera and the first camera is at a right angle to a connecting line between the fourth camera and the first camera.

In some embodiments, the remaining cameras further comprise a fifth camera; the fifth camera is arranged at the other side of the first camera relative to the third camera; and a connecting line between the fifth camera and the first camera is on the same straight line as the connecting line between the third camera and the first camera.

In some embodiments, distances between the first camera and the remaining cameras are equal.

In some embodiments, the remaining cameras further comprise a sixth camera; and a connecting line between the sixth camera and the third camera is perpendicular to the connecting line between the third camera and the first camera.

In some embodiments, the at least three cameras are located in the same plane.

In some embodiments, the 3D display terminal comprises the apparatus described above.

In some embodiments, the 3D photographing method is adapted to a scene that at least three cameras are included, a first camera of the at least three cameras is taken as a center, the remaining cameras of the at least three cameras are arranged at a periphery of the first camera, and any two of the at least three cameras are capable of photographing a 3D image by cooperation.

The method comprises:
monitoring whether a posture of a 3D display terminal changes; and
adjusting a cooperation mode of the at least three cameras in response to a change of the posture.

In some embodiments, the method is adapted to a scene that the at least three cameras are located in the same plane, the remaining cameras comprise a second camera, a third camera and a fourth camera, the second camera and the fourth camera are oppositely arranged at both sides of the first camera, a connecting line between the third camera and the first camera is at a right angle to a connecting line between the second camera and the first camera, and a connecting line between the third camera and the first camera is at a right angle to a connecting line between the fourth camera and the first camera.

Adjusting a cooperation mode of the at least three cameras in response to a change of the posture comprises:
configuring the first camera and the third camera to respectively acquire a left-eye image and a right-eye image when the posture of the 3D display terminal does not change; and
configuring the first camera and the second camera or the fourth camera to respectively acquire the left-eye image and the right-eye image when the posture of the 3D display terminal is rotation by 90°.

In some embodiments, adjusting a cooperation mode of the at least three cameras in response to a change of the posture comprises:
switching the first camera and the third camera to respectively acquire the right-eye image and the left-eye image when the posture of the 3D display terminal is rotation by 180°.

In some embodiments, the method is adapted to a scene that the remaining cameras further comprise a fifth camera; the fifth camera is arranged at the other side of the first camera relative to the third camera; and a connecting line between the fifth camera and the first camera is on the same straight line as the connecting line between the third camera and the first camera.

Adjusting a cooperation mode of the at least three cameras in response to a change of the posture comprises:
configuring the first camera, and the third camera or the fifth camera to respectively acquire a left-eye image and a right-eye image when the posture of the 3D display terminal does not change; and
configuring the first camera, and the second camera or the fourth camera to respectively acquire the left-eye image and the right-eye image when the posture of the 3D display terminal is rotation by 90°.

In some embodiments, adjusting a cooperation mode of the at least three cameras in response to a change of the posture comprises:
switching the first camera and the third camera or the fifth camera to respectively acquire the right-eye image and the left-eye image when the posture of the 3D display terminal is rotation by 180°.

In some embodiments, the 3D photographing apparatus comprises a processor, and a memory storing program instructions; and the processor is configured to execute the method mentioned above when executing the program instructions.

The computer-readable storage medium provided by the embodiments of the present disclosure stores computer-executable instructions; and the computer-executable instructions are configured to execute the 3D photographing method.

The computer program product provided by the embodiments of the present disclosure comprises a computer program stored on the computer-readable storage medium; the computer program comprises program instructions; and when the program instructions are executed by a computer, the computer is made to execute the 3D photographing method.

The 3D photographing apparatus, the 3D photographing method, the 3D display terminal, the computer-readable storage medium, and the computer program product provided by the embodiments of the present disclosure may achieve the following technical effect:
a normal 3D image is photographed after change in spatial positions of cameras.

The above general description and the following description are exemplary and explanatory only, and are not intended to limit the present application.

### DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Fig. 1 is a schematic diagram of a 3D photographing apparatus provided by an embodiment of the present disclosure;
Fig. 2 is another schematic diagram of the 3D photographing apparatus provided by an embodiment of the present disclosure;
Fig. 3 is another schematic diagram of the 3D photographing apparatus provided by an embodiment of the present disclosure;
Fig. 4 is another schematic diagram of the 3D photographing apparatus provided by an embodiment of the present disclosure;
Fig. 5 is another schematic diagram of the 3D photographing apparatus provided by an embodiment of the present disclosure;
Fig. 6 is a flow chart of a 3D photographing method provided by an embodiment of the present disclosure;
Fig. 7 is a flow chart of a 3D photographing method provided by an embodiment of the present disclosure;
Fig. 8 is a flow chart of a 3D photographing method provided by an embodiment of the present disclosure; and
Fig. 9 is a structural schematic diagram of the 3D photographing method provided by an embodiment of the present disclosure.

Reference numerals:
10, 20, 30, 40, 50: first camera; 11, 21, 31, 41, 51: second camera; 12, 22, 32, 42, 52: third camera; 13, 13', 23, 33, 43, 53: fourth camera; 34, 54: fifth camera; and 44, 55: sixth camera.

### DETAILED DESCRIPTION

To understand features and technical contents of embodiments of the present disclosure in more detail, implementation of the embodiments of the present disclosure is described in detail below with reference to accompanying drawings; and the accompanying drawings are used for reference only, rather than limiting the embodiments of the present disclosure. In following technical description, for the convenience of explanation, a thorough understanding of the disclosed embodiments is provided through more details. However, one or more embodiments may be implemented without the details. In other cases, to simplify the accompanying drawings, well-known structures and apparatuses may be shown simplistically.

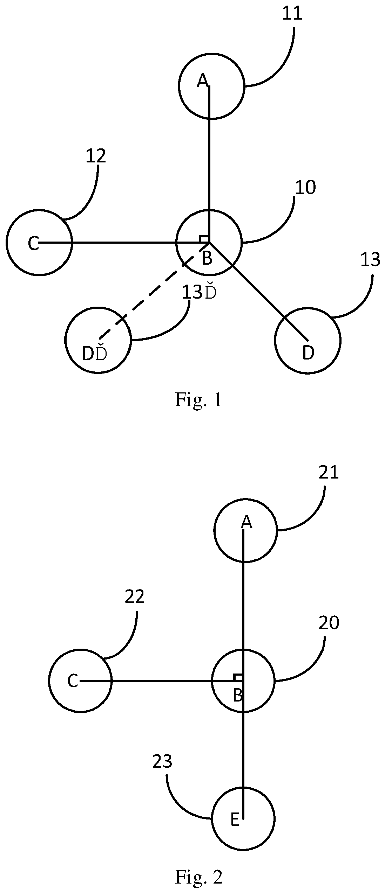

Referring to Fig. 1, an embodiment of the present disclosure provides a 3D photographing apparatus, comprising at least three cameras; a first camera 10 of the at least three cameras is taken as a center, and the remaining cameras of the at least three cameras are arranged at a periphery of the first camera 10; and connecting lines between the remaining cameras and the first camera 10 form at least one right angle, wherein any two of the at least three cameras are capable of photographing a 3D image by cooperation.

After a change in a posture of camera, original cameras cooperating to photograph a 3D image may be switched with other cameras to photograph the 3D image.

As shown in Fig. 1, the 3D photographing apparatus comprises three cameras, only including a first camera 10, a second camera 11 and a third camera 12. In this case, a connecting line between a center B of the first camera 10 and a center A of the second camera 11 and a connecting line between the center B of the first camera 10 and a center C of the third camera 12 form a right angle; and any two of the at least three cameras are capable of photographing a 3D image by cooperation.

The 3D photographing apparatus shown in Fig. 1 comprises four cameras: a first camera 10, and the remaining cameras, including a second camera 11, a third camera 12, and a fourth camera 13 (13'), wherein the connecting line between the center B of the first camera 10 and the center A of the second camera 11 and the connecting line between the center B of the first camera 10 and the center C of the third camera 12 form a right angle.

When the first camera 10 and the third camera 12 are adopted to photograph a 3D image, the first camera 10 and the second camera 11 are switched to photograph the 3D image when the posture of camera changes by 90°. A difference based on clockwise rotation and counterclockwise rotation is to configure the first camera 10 or the second camera 11 to photograph a left-eye image, and correspondingly configure the first camera 10 or the second camera 11 to photograph a right-eye image.

A connecting line between a center D (D') of the fourth camera 13 (13') and the first camera 10 and a connecting line between the second camera (third camera) and the first camera 10 may form an angle of 45° or the like, which is not limited here. When the change in the posture of camera is clockwise rotation by 135°, the first camera 10 and the fourth camera 13 are switched to photograph the 3D image. When the change in the posture of camera is clockwise rotation by 45°, the first camera 10 and the fourth camera 13' are switched to photograph the 3D image.

The 3D photographing apparatus may comprise the fourth camera 13 and the fourth camera 13' at the same time; and a connecting line between the center D of the fourth camera 13 and the center B of the first camera 10 is at an angle of 90° to a connecting line between the center D' of the fourth camera 13' and the center B of the first camera 10. In this case, the 3D image may be photographed whether the change in the posture of camera is clockwise rotation by 45° or clockwise rotation by 135°.

Referring to Fig. 2, in some embodiments, the remaining cameras comprise a second camera 21, a third camera 22 and a fourth camera 23; the second camera 21 and the fourth camera 23 are oppositely arranged at both sides of the first camera 20; and a connecting line between the third camera 22 and the first camera 20 is at a right angle to a connecting line between the second camera 21 and the first camera 20, and a connecting line between the third camera 22 and the first camera 20 is at a right angle to a connecting line between the fourth camera 23 and the first camera 20, respectively.

As shown in Fig. 2, a connecting line between a center C of the third camera 22 and a center B of the first camera 20 is at a right angle to a connecting line between a center A of the second camera 21 and a center B of the first camera 20; and the connecting line between the center C of the third camera and the center B of the first camera 20 is at a right angle to a connecting line between a center E of the fourth camera 23 and the center B of the first camera 20. When a 3D display apparatus selects the first camera 20 and the third camera 22 to photograph a 3D image, if the posture of camera rotates 90°, the second camera 21 or the fourth camera 23 may be configured to complete 3D photographing by cooperating with the first camera 20, regardless of clockwise rotation or counterclockwise rotation. In addition, if a distance between the camera and an object photographed is increased, the second camera 21 and the fourth camera 23 may be switched to photograph the 3D image by cooperation.

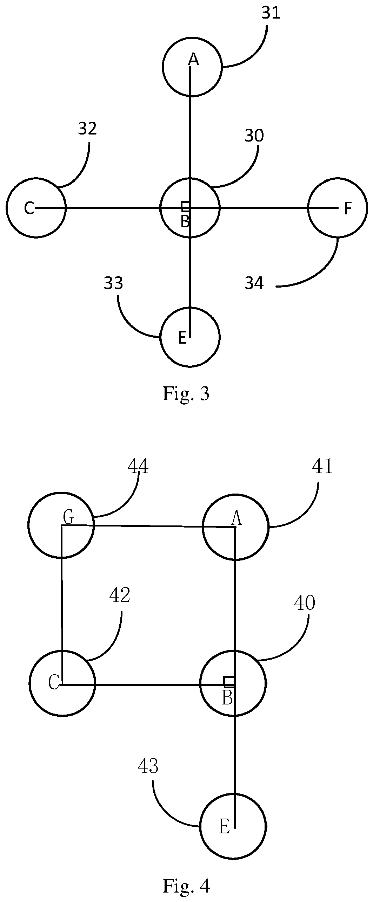

Referring to Fig. 3, in some embodiments, the remaining cameras further comprise a fifth camera 34; the fifth camera 34 is arranged at the other side of the first camera 30 relative to the third camera 32; and a connecting line between the fifth camera 34 and the first camera 30 is on the same straight line as the connecting line between the third camera 32 and the first camera 30.

Referring to Fig. 3, the 3D photographing apparatus comprises a first camera 30, a second camera 31, a third camera 32, a fourth camera 33, and a fifth camera 34, wherein a connecting line between a center A of the second camera 31 and a center B of the first camera 30 is at a right angle to a connecting line between a center C of the third camera 32 and the center B of the first camera 30; and a connecting line between a center E of the fourth camera 33 and the center B of the first camera 30 is at a right angle to the connecting line between the center C of the third camera 32 and the center B of the first camera 30. When a connecting line between a center F of the fifth camera 34 and the center B of the first camera 30 is on the same straight line as the connecting line between the center C of the third camera 32 and the center B of the first camera 30, original cameras for 3D photographing may be the first camera 30 and the third camera 32, the first camera 30 and the fifth camera 34, or the third camera 32 and the fifth camera 34; and cameras capable of cooperating to photograph a 3D image after rotation by 90° may be the first camera 30 and the second camera 31, the first camera 30 and the fourth camera 33, or the second camera 31 and the fourth camera 33. Selection to the above camera combinations may be determined according to a photographed object distance and a rotation direction.

Referring to Figs. 1-3, in some embodiments, distances between the first camera and the remaining cameras are equal.

Referring to Fig. 4, in some embodiments, the remaining cameras further comprise a sixth camera 44 or 54; and a connecting line between the sixth camera and the third camera is perpendicular to the connecting line between the third camera and the first camera.

Original cameras cooperating to photograph a 3D image may be a first camera 40 and a third camera 42 cooperating to photograph the 3D image, or a second camera 41 and the sixth camera 44 cooperating to photograph the 3D image, and after clockwise or counterclockwise rotation by 90°, may be switched with the first camera 40 and the second camera 41 or a fourth camera 43 cooperating to photograph the 3D image, or the third camera 42 and the sixth camera 44 cooperating to photograph the 3D image.

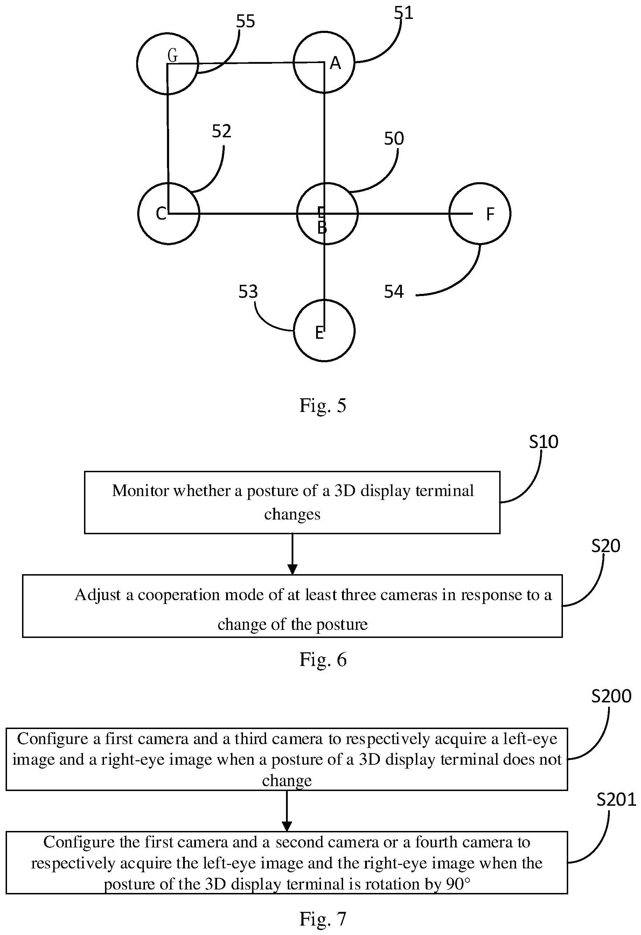

Referring to Fig. 5, in some embodiments, the remaining cameras further comprise a sixth camera 44 or 54; and the connecting line between the sixth camera and the third camera is perpendicular to the connecting line between the third camera and the first camera.

Original cameras cooperating to photograph a 3D image may be a first camera 50 and a third camera 52, the first camera 50 and a fifth camera 54, the third camera 52 and the fifth camera 54, or a second camera 51 and a sixth camera 55, and after clockwise or counterclockwise rotation by 90°, are switched with the first camera 50 and the second camera 51, the third camera 52 and the sixth camera 55, or the first camera 50 and a fourth camera 53, cooperating to photograph the 3D image.

In some embodiments, the at least three cameras are located in the same plane.

Embodiments of the present disclosure further provide a 3D display terminal, comprising the apparatus mentioned above.

As shown in Fig. 6, in some embodiments, a 3D photographing method is adapted to a scene that at least three cameras are included, a first camera of the at least three cameras is taken as a center, the remaining cameras of the at least three cameras are arranged at a periphery of the first camera, and any two of the at least three cameras are capable of photographing a 3D image by cooperation; and the 3D photographing method comprises:
S10: monitoring whether a posture of a 3D display terminal changes; and
S20: adjusting a cooperation mode of the at least three cameras in response to a change of the posture.

In some embodiments, the method is adapted to a scene that the at least three cameras are located in the same plane, the remaining cameras comprise a second camera, a third camera and a fourth camera, the second camera and the fourth camera are oppositely arranged at both sides of the first camera, and a connecting line between the third camera and the first camera is at a right angle to a connecting line between the second camera and the first camera and a connecting line between the fourth camera and the first camera, respectively (See Fig. 2).

When S20 of adjusting a cooperation mode of the at least three cameras in response to a change of the posture is executed, the following operations may be executed:
S200: configuring the first camera, and the third camera to respectively acquire a left-eye image and a right-eye image when the posture of the 3D display terminal does not change; and
S201: configuring the first camera and the second camera or the fourth camera to respectively acquire the left-eye image and the right-eye image when the posture of the 3D display terminal is rotation by 90°.

In some embodiments, adjusting a cooperation mode of the at least three cameras in response to a change of the posture comprises:
switching the first camera and the third camera to respectively acquire the right-eye image and the left-eye image when the posture of the 3D display terminal is rotation by 180°.

In some embodiments, the remaining cameras further comprise a fifth camera; the fifth camera is arranged at the other side of the first camera relative to the third camera; and a connecting line between the fifth camera and the first camera is on the same straight line as the connecting line between the third camera and the first camera (See Fig. 3).

Adjusting a cooperation mode of the at least three cameras in response to a change of the posture comprises:
configuring the first camera, and the third camera or the fifth camera to respectively acquire a left-eye image and a right-eye image when the posture of the 3D display terminal does not change; and
configuring the first camera, and the second camera or the fourth camera to respectively acquire the left-eye image and the right-eye image when the posture of the 3D display terminal is rotation by 90°.

In some embodiments, adjusting a cooperation mode of the at least three cameras in response to a change of the posture comprises: switching the first camera and the third camera or the fifth camera to respectively acquire the right-eye image and the left-eye image when the posture of the 3D display terminal is rotation by 180°.

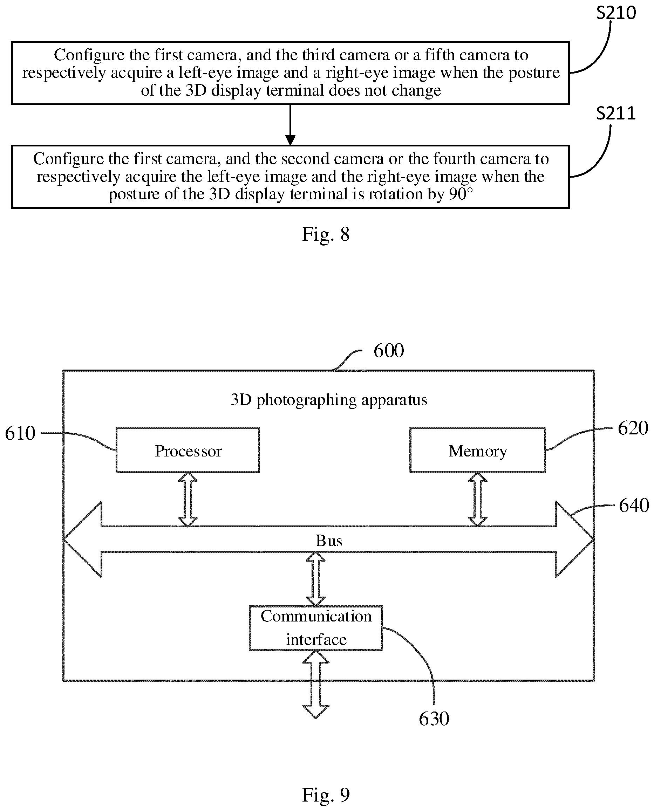

Referring to Fig. 9, in some embodiments, the 3D photographing apparatus provided by embodiments of the present disclosure comprises a processor, and a memory, storing program instructions; and the processor is configured to execute the method mentioned above when executing the program instructions. The structure is as shown in Fig. 5, comprising:
a processor 610 and a memory 620, and further comprising a communication interface 630 and a bus 640. The processor 610, the communication interface 630, and the memory 620 may communicate with each other through the bus 640. The communication interface 630 may be used for information transmission. The processor 610 may call the logic instructions in the memory 620, to execute the method for realizing 3D photographing in the above embodiments.

In addition, the logic instructions in the memory 620 may be implemented in the form of software functional units, and may be stored in a computer-readable storage medium when being sold or used as an independent product.

The memory 620, as a computer-readable storage medium, may be used for storing software programs and computer-executable programs, such as program instructions/modules corresponding to the methods in embodiments of the present disclosure. The processor 610 executes the function application and data processing by running the program instructions/modules stored in the memory 620, i.e., executes the method for realizing 3D photographing in embodiments of the above method.

The memory 620 may comprise a program storage region and a data storage region, wherein the program storage region may store an operating system and application programs required by at least one function; the data storage region may store data created according to the use of a terminal device, and the like. In addition, the memory 620 may comprise a high-speed random access memory (RAM), and may further comprise a nonvolatile memory (NVM).

Embodiments of the present disclosure provide a computer-readable storage medium, storing computer-executable instructions; and the computer-executable instructions are configured to execute the 3D photographing method.

Embodiments of the present disclosure provide a computer program product, comprising a computer program stored on the computer-readable storage medium; the computer program comprises program instructions; and when the program instructions are executed by a computer, the computer is allowed to execute the 3D photographing method.

The computer-readable storage medium may be a transient computer-readable storage medium, and may also be a non-transient computer-readable storage medium.

Technical solutions of embodiments of the present disclosure may be reflected in the form of a software product, which is stored in a storage medium and comprises one or more instructions for enabling computer equipment (which may be a personal computer, a server, network equipment or the like) to perform all or some steps of the method in embodiments of the present disclosure. The storage medium may be a non-transient storage medium, comprising a plurality of media capable of storing program codes, such as a U disk, a mobile hard disk, a read-only memory (ROM), a random access memory (RAM), a diskette or an optical disk, and may also be a transient storage medium.

The above description and drawings sufficiently illustrate the embodiments of the present disclosure to enable those skilled in the art to practice them. Other embodiments may comprise structural, logical, electrical, process, and other changes. The embodiments represent only possible changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. When used in the present application, although the terms of "first", "second", etc. may be possibly used in the present application to describe various elements, these elements should not be limited by these terms. These terms are only used to distinguish one element from another. For example, without changing the meaning of the description, a first element may be called as a second element, and similarly, the second element may be called as the first element, as long as all of "the first elements" that appear are consistently renamed and all of "the second elements" that appear are consistently renamed. The first element and the second element are both elements, but may not be the same element. Moreover, the terms used in the present application are used to describe the embodiments only and not to limit the claims. As used in the illustration of the embodiments and the claims, unless clearly indicated in the context, the singular forms "a", "an" and "the" are also intended to include the plural forms. Similarly, the term "and/or" as used in the present application is meant to include any and all possible combinations of one or more of the associated listings. In addition, when used in the present application, the term "comprise" and its variations "comprises" and/or "comprising", etc., refer to the presence of stated features, integers, steps, operations, elements, and/or components, but does not preclude the presence or addition of one or more other features, integers, steps, operations, elements, components and/or groupings of these. Without further limitations, an element limited by the phrase "comprises a..." does not preclude the presence of additional identical elements in the process, method or device that includes the element. Herein, the difference of each embodiment from each other may be the focus of explanation. The same and similar parts among all of the embodiments may be referred to each other. For the method and product disclosed by the embodiments, if the method and product correspond to a method part disclosed by the embodiments, the description of the method part may be referred to for the related part.

Those skilled in the art may recognize that the units and algorithm steps of each example described in conjunction with the embodiments disclosed herein may be implemented in electronic hardware, or a combination of computer software and electronic hardware. Whether these functions are performed in hardware or software may depend on the specific application and design constraints of the technical solution. Those skilled in the art may use different methods for implementing the described functions for each particular application, but such implementations should not be considered beyond the scope of the embodiments of the present disclosure. Those skilled in the art may clearly understand that, for the convenience and brevity of description, the corresponding processes in the above method embodiments may be referred to for the specific working processes of the above systems, devices and units, which will not be repeated here.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units, that is, may be located in one place, or may be distributed on multiple network units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

The flow charts and block diagrams in the drawings show architectures, functions and operations possibly implemented by systems, methods and computer program products according to the embodiments of the present disclosure. In this regard, each block in the flow charts or block diagrams may represent a part of a module, program segment or code, and part of the module, program segment or code contains one or more executable instructions for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flow charts and the block diagrams in the drawings, operations or steps corresponding to different blocks may also occur in different orders than those disclosed, and sometimes there is no specific order between different operations or steps. For example, two continuous operations or steps may be actually performed substantially concurrently, or sometimes may be performed in the reverse order, depending on the functions involved. Each block in the block diagrams and/or flow charts, and combinations of the blocks in the block diagrams and/or flow charts, may be implemented by special hardware-based systems that perform specified functions or actions, or implemented by combinations of special hardware and computer instructions.

## Claims

1. A 3D photographing apparatus, comprising at least three cameras, wherein a first camera of the at least three cameras is taken as a center, and remaining cameras of the at least three cameras are arranged at a periphery of the first camera; and connecting lines between the remaining cameras and the first camera form at least one right angle, wherein any two of the at least three cameras being capable of photographing a 3D image by cooperation.

2. The apparatus according to claim 1, wherein the remaining cameras comprise a second camera, a third camera and a fourth camera; the second camera and the fourth camera are oppositely arranged at two sides of the first camera; a connecting line between the third camera and the first camera is at a right angle to a connecting line between the second camera and the first camera, and a connecting line between the third camera and the first camera is at a right angle to a connecting line between the fourth camera and the first camera.

3. The apparatus according to claim 2, wherein the remaining cameras further comprise a fifth camera; the fifth camera is arranged at an other side of the first camera relative to the third camera; and a connecting line between the fifth camera and the first camera is on a same straight line as a connecting line between the third camera and the first camera.

4. The apparatus according to claim 1, wherein distances between the first camera and the remaining cameras are equal.

5. The apparatus according to any one of claims 2-4, wherein the remaining cameras further comprise a sixth camera; and a connecting line between the sixth camera and the third camera is perpendicular to a connecting line between the third camera and the first camera.

6. The apparatus according to claim 1, wherein the at least three cameras are located in a same plane.

7. A 3D display terminal, comprising the apparatus of any one of claims 1-6.

8. A 3D photographing method, adapted to a scene that at least three cameras are involved, a first camera of the at least three cameras is taken as a center, remaining cameras of the at least three cameras are arranged at a periphery of the first camera, and any two of the at least three cameras being capable of photographing a 3D image by cooperation, comprising:
monitoring whether a posture of a 3D display terminal changes; and
adjusting a cooperation mode of the at least three cameras in response to a change of the posture.

9. The method according to claim 8, wherein the method is adapted to a scene that the at least three cameras are located in a same plane, the remaining cameras comprise a second camera, a third camera and a fourth camera, the second camera and the fourth camera are oppositely arranged at two sides of the first camera, a connecting line between the third camera and the first camera is at a right angle to a connecting line between the second camera and the first camera, and a connecting line between the third camera and the first camera is at a right angle to a connecting line between the fourth camera and the first camera; adjusting a cooperation mode of the at least three cameras in response to a change of the posture comprises:
configuring the first camera and the third camera to respectively acquire a left-eye image and a right-eye image when a posture of the 3D display terminal does not change; and
configuring the first camera and the second camera or the fourth camera to respectively acquire the left-eye image and the right-eye image when a posture of the 3D display terminal is rotation by 90°.

10. The method according to claim 9, wherein adjusting a cooperation mode of the at least three cameras in response to a change of the posture comprises:
switching the first camera and the third camera to respectively acquire the right-eye image and the left-eye image when a posture of the 3D display terminal is rotation by 180°.

11. The method according to claim 9 or 10, wherein the method is adapted to a scene that the remaining cameras further comprise a fifth camera, the fifth camera is arranged at an other side of the first camera relative to the third camera and a connecting line between the fifth camera and the first camera is on a same straight line as a connecting line between the third camera and the first camera; adjusting a cooperation mode of the at least three cameras in response to a change of the posture comprises:
configuring the first camera, and the third camera or the fifth camera to respectively acquire a left-eye image and a right-eye image when a posture of the 3D display terminal does not change; and
configuring the first camera, and the second camera or the fourth camera to respectively acquire the left-eye image and the right-eye image when a posture of the 3D display terminal is rotation by 90°.

12. The method according to claim 11, wherein adjusting a cooperation mode of the at least three cameras in response to a change of the posture comprises:
switching the first camera and the third camera or the fifth camera to respectively acquire the right-eye image and the left-eye image when a posture of the 3D display terminal is rotation by 180°.

13. A 3D photographing apparatus, comprising a processor and a memory storing program instructions, wherein the processor is configured to execute the method of any one of claims 8-12 when executing the program instructions.

14. A computer-readable storage medium, storing computer-executable instructions, wherein the computer-executable instructions are configured to execute the method of any one of claims 8-12.

15. A computer program product, comprising a computer program stored on a computer-readable storage medium, wherein the computer program comprises program instructions which, when executed by a computer, cause the computer to execute the method of any one of claims 8-12.
